(19) Europäisches Patentamt / European Patent Office / Office européen des brevets

(11) **EP 4 380 022 A1**

(12) **EUROPEAN PATENT APPLICATION**

(43) Date of publication:
**05.06.2024 Bulletin 2024/23**

(51) International Patent Classification (IPC):
**H02M 1/00** (2006.01)

(21) Application number: **22210939.9**

(52) Cooperative Patent Classification (CPC):
**H02M 1/0012; H02M 7/53873**

(22) Date of filing: **01.12.2022**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
- **Rolls-Royce Solutions GmbH**
  **88045 Friedrichshafen (DE)**
- **Rolls-Royce plc**
  **London SW1E 6AT (GB)**

(72) Inventors:
- **Liu, Xiong**
  **648923 SINGAPORE (SG)**
- **Zwerger, Tanja**
  **88094 0berteuringen (DE)**
- **Dasgupta, Souvik**
  **88045 Friedrichshafen (DE)**
- **Gupta, Amit**
  **650386 SINGAPORE (SG)**

(74) Representative: **Eisenführ Speiser**
**Patentanwälte Rechtsanwälte PartGmbB**
**Stralauer Platz 34**
**10243 Berlin (DE)**

(54) **CONTROLLER ARRANGEMENT FOR A SWITCHED-MODE ELECTRICAL POWER INVERTER, SWITCHED-MODE ELECTRICAL POWER INVERTER ARRANGEMENT, ELECTRICAL-POWER SYSTEM AND METHOD FOR CONTROLLING OPERATION OF A SWITCHED-MODE ELECTRICAL POWER INVERTER**

(57) The invention relates to a controller arrangement (100) for controlling operation of an inverter in form of a switched-mode electrical power inverter, the controller arrangement having a control structure (106) comprising: a switching-element control-signal unit (180), that is configured to generate and provide a switching-element control signal (182) for controlling switching elements of the inverter. According to the invention, the control structure (106) further comprises: a transformation-control-computation unit (108), that is configured to determine and provide from a transformed three-phase voltage signal (102) and a reference voltage signal (104), a transformed voltage-control signal (110) in a synchronous-rotating reference frame of a fundamental frequency of the three-phase AC output voltage; and one or more resonant-control elements (120.1, 120.2, 120.n, 140.1, 140.2, 140.n), that receive the transformed voltage-control signal (110) and that are configured, using the transformed voltage-control signal (110), to provide a voltage-correction signal (122.1, 122.2, 122.n, 142.1, 142.2, 142.n) for use in generating the switching-element control signal (182).

FIG. 2B

EP 4 380 022 A1

**Description**

The present invention relates to a controller arrangement for controlling operation of an inverter in form of a switched-mode electrical power inverter, the controller arrangement having a control structure. Said control structure as such comprises a switching-element control-signal unit that is configured to generate and provide a switching-element control signal for controlling switching elements of the inverter.

The present invention also relates to a switched-mode electrical power inverter arrangement having a switched-mode electrical power inverter, hereinafter inverter. In particular said power inverter arrangement also comprises a rectifier. The inverter is adapted for converting a DC voltage into a three-phase AC voltage. Said power inverter arrangement also comprises the controller arrangement.

The present invention also relates to an electrical-power system comprising: a DC-Voltage source, said switched-mode electrical power inverter arrangement, a 3-phase inductor arrangement, in particular transformer, and a switchboard for connecting a load.

Converter arrangements in general have gained increased importance during the latest past both for applications in converting power from power sources like power storages but also for power generating units like generatorsets; both in stationary and mobile applications. Crucial for power converter arrangements are respective controller arrangements for controlling operation of a converter related therewith and more importantly dedicated to the specific task and application connected or to be connected to the power storage. A contemporary task in addition is to contribute a specific control means in a controller arrangement to observe also the impact of a load, which is to be connected to a converter in operation.

Generally, a DC power supply like, for instance, a power storage of a battery or a capacity but also energy generating sources like generatorsets of an electro-magnetic generator driven by some drive is electrically connected --possibly by means of a rectifier and/or a DC intermediate circuit-- to the inverter as mentioned above. In turn a load is connected to the inverter via mostly a transformer and a coupling link; the coupling link again can be combined with an intermediate circuit of capacities and/or inductivities.

The DC current can be provided, for instance, by means of a rectifier from an irregular source of alternating current; i.e. like a generatorset or some other energy generating unit. Said DC current also can be provided by an energy storage as mentioned before. Thus, the DC/AC converter (hereinafter inverter) is to be provided in an advantageous mode of operation to provide the best form of alternating current and voltage, respectively power, depending on the kind of application and load. Loads may vary from rather sensitive loads like an electrical drive or a comparative less sensitive load of a power grid - still this depends on the circumstances case by case.

An inverter as such can be considered as a DC to AC converter (hereinafter simply inverter), i.e. as an electronic circuit device that converts a source of direct current (DC current) from a voltage level to the same or other voltage level of alternating current (AC current). Said inverter and/or rectifier very generally speaking is constituted by a specific arrangement of switching elements, wherein a switching element mostly is realized through a parallel or anti-parallel arrangement of a diode and a transistor. The switching element as mentioned generally can be provided in combination with other switching elements in a circuit like, for instance, a bridge circuit, which also sometimes are labelled as bridge converter circuits. Said converter circuits are subject to control of the switching elements by means of a control arrangement; said control arrangement being the subject of the instant invention.

The invention also leads to a switched mode electrical power inverter arrangement in a particularly preferred application as mentioned in the introduction. The instant invention also leads to an electrical power system and a method for controlling operation of a switched mode electrical power inverter as mentioned in the introduction.

A three-phase current with an utmost pure sinusoidal phase in each of the three phases of the alternating current is to be achieved in an advantageous case.

A specific problem arises for specifically large scale inverters in that heavy loads are connected thereto which have impact to the output voltage of said inverter. The impact of heavy loads even can be fortified due to the fact that the load usually is connected to the inverter by means of a transformer or the like inductor connecting means which works on to the desired frequency of the alternating current depending on the grid or load application. This transformer or the like inductor means is further adapted to provide the inverted voltage on a different voltage level other than the level of voltage for operation of the inverter.

Whereas the above-mentioned object of also taking into account the impact of load and in particular heavy load to the operation of a control arrangement for controlling operation of an inverter in form of a switched mode electrical power inverter or other kind of direct current source for generating an alternating current. Still nevertheless, it is desirable to keep balance between a sophisticated control and efficient control with nevertheless good and advantageous outcome when operating the inverter arrangement for generating said alternating current.

More specifically, conventional repetitive control techniques have been established to provide improved operation of an inverter. A repetitive controller in stationary reference frame basically is known in the art. In the article of Luis Fernando Alves Pereira et al. named "Multiple Resonant Controllers for Uninterruptible Power Supplies - A Systematic Robust Control Design Approach ", published in IEEE TRANSACTIONS ON INDUSTRIAL ELECTRONICS, VOL. 61, NO. 3, MARCH 2014, the synthesis problem of multiple resonant controllers for uninterruptible-power-supply systems in a robust control framework as addressed. The controller parameters aiming the tracking of sinusoidal reference signals (with zero steady-state control) and the rejection of harmonic components of the output voltage (when supplying energy to time-varying nonlinear loads) are determined by means of a convex optimization problem subject to a set of linear-matrix-inequality constraints. Results from a 5.0-kVA experimental setup are considered to illustrate and validate the proposed approach.

However, the efficiency thereof, in particular on the calculatory side, can be improved as to handling harmonic distortions.

A filter and other tools can apply for distortions of a signal to be outputted by an inverter. In another approach a band-pass filter can be used to extract different harmonics component and transform those different harmonics into DC quantity in multiple dq reference frame rotating at different speed either counter clockwise or clockwise. These still are limited in effect or very sophisticated.

Further, two harmonic current standards for different appliances connected to the power supply - ($1^{st}$ is IEC 61000-3-2:2018,"Electromagnetic compatibility (EMC)" - Part 3-2: Limits for harmonic current emissions (equipment Input current $\leq 16$ A per phase), and ($2^{nd}$ is) IEEE Standard 519 IEEE Recommended Practice and Requirements for Harmonic Control in Electric Power Systems-- deal with the limitation of harmonic currents injected into the public supply system. They inter alia specify limits of harmonic components of the input current, which can be produced by equipment tested under specified conditions.

The instant invention is specifically dedicated to improve an electrical power inverter arrangement having a switched mode electrical power inverter to provide a switched mode electrical power inverter arrangement of improved kind. Said switched mode electrical power inverter is controlled by a controller arrangement for controlling operation of the inverter in form of the switched mode electrical power inverter as mentioned in the introduction.

A promising strategy to provide a multiple dq-reference frame approach --up to now--, has been sophisticated. A multiple controller approach in multiple dq reference frame rotating at different speed to deal with the nonlinear loads is known e.g. from the article of Shuai Jiang et al., named "Low-THD, Fast-Transient, and Cost-Effective Synchronous-Frame Repetitive Controllers for Three-Phase UPS Inverters", as published in IEEE TRANSACTIONS 2994 ON POWER ELECTRONICS, VOL. 27, NO. 6, JUNE 2012. Therein a synchronous-frame repetitive controller for three-phase UPS Inverters is presented. The proposed synchronous-frame approach minimizes the repetitive control time delay to one-sixth of the fundamental period such that the dynamic response is significantly improved. In order to overcome the harmonic distortions under severe load conditions (e.g., unbalanced and nonlinear), in this paper, three synchronous rotating frames are deliberately selected, in each of which the repetitive controller is incorporated.

Indeed, for the repetitive controller as shown in Shuai Jiang et al., the control structure is more complex than in multiple resonant controllers. The control structure comprises three different transformation elements transforming a control signal from a stationary reference frame into a synchronous-rotating reference frame; each of the three transformation elements is performing the rotation with a different frequency; namely Frame #1 (rotating at $+\omega 0$), Frame #2 (rotating at $-\omega 0$), and Frame #3 (rotating at $+3\omega 0$), respectively. Thus, the control parameters need to be designed very carefully with deep digital control theory analysis knowledge to ensure system stability for the complex computation and realization and the overall not easy engineering implementation.

A further demand arises for the inventive field of an inverter, in particular like onboard inverter products of mobile or stationary systems, like e.g. a generatorset application for stationary power generation or a hybrid train auxiliary inverter product. For seemingly unusual load conditions a repetitive controller is limited, whereas in part load conditions of nonlinear loads, unbalanced loads and heavy loads alone or in random combination put impact to the controller not being addressed yet sufficiently.

This is where the invention comes in, the object thereof is to provide an arrangement, in particular controller arrangement, and method adapted to provide an alternating current and voltage with a three-phase AC power as "pure" as possible, i.e. the phases involved should at best have the form of a sinus; i.e. at best sinusoidal three-phase currents should be available from the inverter. In particular therein the three phases should be free of an offset und distributed evenly as far as possible. Further the three phases should be free of ripples as far as possible. These results should be achievable and upheld even in view of non-linear dynamics and heavy load and load ramps of a load connected to the inverter. Further, the aim of the invention is to optimize the hardware complexity for the control; i.e. to keep complexity as low as possible.

This object is achieved in a first aspect by the invention by a controller arrangement according to claim 1.

The invention starts from the controller arrangement as mentioned in the introduction for controlling operation of an inverter in form of a switched-mode electrical power inverter, the controller arrangement having a control structure. Said control structure comprises a switching-element control-signal unit that is configured to generate and provide a switching-element control signal for controlling switching elements of the inverter.

According to the invention said control structure further comprises:

- a transformation-control-computation unit, that is configured to determine and provide from a transformed three-phase voltage signal and a reference voltage signal, a transformed voltage-control signal in a synchronous-rotating reference frame of a fundamental frequency of the three-phase AC output voltage; and
- one or more resonant-control elements, that receive the transformed voltage-control signal and that are configured, using the transformed voltage-control signal, to provide a voltage-correction signal for use in generating the switching-element control signal.

The invention has recognized, that the object as mentioned above can be achieved at best by regulatory measures as claimed with resonant-control elements, wherein the voltages involved are regulated in one dq system, i.e. a single synchronous frame, which is rotating at $+\omega 0$--- i.e. a transformation-control-computation unit is configured to determine and provide from a transformed three-phase voltage signal and a reference voltage signal, a transformed voltage-control signal in a synchronous-rotating reference frame of a fundamental frequency of the three-phase AC output voltage.

A transformation from the three-phase "abc"-system to the "dq"-system involved therewith for this purpose, -- preferably said transformation between the three-phase voltage signal and the transformed three-phase voltage signal-- is hereinafter referred to as an abc/dq-transformation. Said abc/dq-transformation can comprise or consist of a Clarke- or a Park-transformation; also a so called "DQZ"-transformation is preferable as will be explained further down.

All three-phase voltages are involved for these kind of transformations also referred to as T-(abc/dq) or T'-(dq/abc) -transformation, which is based on the generally known three-phase theory. Generally, the input for the transformation is a so-called "theta"-angle as seen from the transformation matrix. The theta angle can be calculated through integration of synchronous angular frequency as $\theta=\int \omega dt$; the background thereof is basically known in the art.

It has been shown that, based on the invention, the controller arrangement for controlling operation of an inverter in form of a switched-mode electrical power inverter is advantageously applicable for applications both mobile and stationary. In this regard -by way of example-- the invention stems from the recognition that for applications both mobile and stationary in a range of mid- and heavy load e.g. for an onboard hybrid train auxiliary inverter, onboard electrical equipment usually contains air conditioner, lighting device, electric heater, and computer, etc.

Here the invention in generally starts from the recognition that -and by way of example for the aforementioned equipment-- loads can be divided into three categories:

1) unbalanced load (single-phase load for household appliances like heater, lighting etc);
2) nonlinear load (diode rectifier as front-end for inverter air conditioning, power supply of computer, and other power electronic devices);
3) sensitive load (contactor Gail, train system control electronics, etc).

A further improve of a control of three-phase, in particular four-wire, inverter using multiple resonant controllers in one synchronous reference frame under unbalanced and nonlinear load conditions has been recognized by the invention as desirable.

It has been found, that the load of an auxiliary inverter covers almost all load types. However, a high quality output voltage is still required for protecting sensitive load. One of the main challenges for three-phase, in particular four-wire, inverter is to supply three-phase balanced output voltages with good sinusoidal shape waveform and low total harmonic distortion (THD) under unbalanced and non-linear load conditions. Without well designed control system, the three-phase voltage waveforms will be unbalanced and distorted under unbalanced and nonlinear load conditions. The demand for higher quality output voltage requires more advanced still efficient control strategy, which is proposed in this invention.

Thus, according to the invention it has been shown that within this one synchronous reference frame a control of a three-phase, in particular four-wire, inverter using multiple resonant controllers is advantageous to achieve the above object even under unbalanced and nonlinear load conditions.

In particular the advantage of resonant controllers over repetitive controllers (repetitive controllers like in Shuai Jiang et al.) has been observed in that for periodic harmonic disturbances, according to internal model theory, at first both the repetitive controller and multiple resonant controllers can achieve better performance than the PI controller. The disadvantage of repetitive controller however is the requirement of several sampling periods to acquire the signal model and eliminate the voltage reference tracking control by the summation of controls from the previous periods. Meanwhile, the parameter determination and system stability evaluation using repetitive controller will be non-trivial as compared with the resonant controller. Therefore, the multiple resonant controllers used in the invention can achieve better performance with relatively simple control block and easy parameter design.

The inventive concept leads in terms of a second aspect to a switched-mode electrical power inverter arrangement having a switched-mode electrical power inverter, hereinafter inverter, and an electrical-power system.

Thus, to achieve the objective, the invention in a second aspect also leads to a switched-mode electrical power inverter arrangement, having a switched-mode electrical power inverter, hereinafter inverter, in particular also comprising a rectifier, the inverter being adapted for converting a DC voltage into a three-phase AC voltage and a controller arrangement according to the invention; therein the controller arrangement is configured to generate and provide a switching-element control signal for controlling switching elements comprised within the inverter.

Thus, to achieve the object, the invention in a second aspect also leads to an electrical-power system comprising:

- a DC-Voltage source,
- the switched-mode electrical power inverter arrangement according to the invention,
- a 3-phase inductor arrangement, in particular transformer,
- a switchboard for connecting a load.

In a particular preferred development the therein the DC-Voltage source is provided as a generatorset with a rectifier, wherein

- the generatorset comprises an internal combustion engine and an electromechanical generator for generating an irregulated 3-phase voltage,

 - the rectifier is adapted as an AC-DC rectifier to convert the irregulated 3-phase voltage into a DC-voltage,

- the switched-mode electrical power inverter arrangement according to the invention is adapted to provide a regulated 3-phase voltage to the switchboard for connecting the load.

The inventive concept leads in terms of a third aspect to a method (for controlling operation of a switched-mode electrical power inverter, hereinafter inverter, with a controller arrangement according to the inventive concept.

Thus, to achieve the objective, the invention in a third aspect also leads to a method for controlling operation of a switched-mode electrical power inverter, hereinafter inverter, the controller arrangement, the method comprising the steps:

- receiving a three-phase voltage signal indicative of a voltage of each of three phases of a three-phase AC output voltage of the inverter in a stationary reference frame of the inverter;
- receiving a reference voltage signal indicative of a desired three-phase AC output voltage of the inverter;
- generating and providing a switching-element control signal for controlling switching elements of the inverter such that a difference between the three-phase AC output voltage and the desired three-phase output voltage is minimized, wherein generating and providing a switching-element control signal comprises the further sub-steps of

 - determining and providing a voltage-control signal indicative of a difference between the three-phase AC output voltage and the desired three-phase output voltage, and
 - providing, using the voltage control signal, a voltage-correction signal used in generating the switching-element control signal;

 wherein the method further comprises the step of determining and providing from the three-phase voltage signal the transformed three-phase voltage signal, which is indicative of the three-phase AC output voltage in a synchronous-rotating reference frame of a fundamental frequency of the three-phase AC output voltage.

Respectively the invention also leads to a computer program product comprising instructions which, when the program is executed by a computer, cause the computer to carry out the steps of the method of the invention.

Further advantageous developments of the invention are found in the dependent claims and indicate in detail advantageous possibilities to realize the concept described above within the scope of the task as well as with regard to further advantages.

In a preferred development, the transformation between the three-phase voltage signal and the transformed three-phase voltage signal is an abc/d-transformation like a Clarke or a Park-transformation or a DQZ-transformation. It is worthwhile to be mentioned that --unlike as for the afore kind of systems in the matter of the invention-- for a single-phase system, resonant controllers can also in principle be applied and are known to suppress the harmonics and guarantee high quality AC power supply; still the problems involved are not that severe. The frequency orders of resonant controllers are kept the same as the harmonic orders, which are to be suppressed.

In electric systems, the *A, B,* and C values --in the instant case the three phases of a three-phase AC output voltage of the inverter in a stationary reference frame of the inverter-- are oscillating in such a way that the net vector is spinning. In a balanced system, the vector is spinning about the Z axis. Very often, it is helpful to rotate the reference frame such that the majority of the changes in the abc values, due to this spinning, are canceled out and any finer variations become more obvious. This is useful as it now transforms the system into a linear time-invariant system.

The Clarke transformation can be thought of as the projection of the three phase quantities (voltages or currents) onto two stationary axes, the alpha axis and the beta axis. A third term will contain the error component of the projection. Thus, a third component of zero indicates that the system is balanced (and thus exists entirely in the alpha-beta coordinate space), and can be ignored for two coordinate calculations that operate under this assumption that the system is balanced.

The DQZ transformation can be thought of in geometric terms as the projection of the three separate sinusoidal phase quantities onto two axes rotating with the same angular velocity as the sinusoidal phase quantities. The DQZ transformation uses the Clarke transform to convert *ABC*-referenced vectors into two differential-mode components (i.e., X and Y) and one common-mode component (i.e., Z) and then applies the Park transform to rotate the reference frame about the Z axis at some given angle. The transformation originally proposed by Park differs slightly from the one given above.

In other words, a DQZ of Park transform is often used in the context of electrical engineering with three-phase circuits. The transform can be used to rotate the reference frames of AC waveforms such that they become DC signals. Simplified calculations can then be carried out on these DC quantities before performing the inverse transform to recover the actual three-phase AC results.

In a particular preferred development thus the control structure comprises control-signal-generation paths for providing different control operations for each coordinate of the synchronous rotating reference frame, in particular wherein different control operations for each dq-coordinate of the synchronous rotating reference frame is provided. The coordinates of the synchronous rotating reference frame are independent and thus individual control thereof is at best possible with lower calculatory demand. A feed-forward and feed-back control in each of the coordinates as well cross-coupling control between the coordinates is advantageously possible.

Preferably, in the controller arrangement it is provided with advantage that

- the transformed three-phase voltage signal is a status voltage in a synchronous-rotating reference frame of a fundamental frequency of the three-phase AC output voltage, and/or
- the reference voltage signal is a feedback voltage in a synchronous-rotating reference frame of a fundamental frequency of the three-phase AC output voltage. The advantage is achieved in that a feedback is directly available in the synchronous-rotating reference frame of a fundamental frequency of the three-phase AC output voltage.

Preferably, in the controller arrangement it is provided with advantage that the controller arrangement further comprises:

- a voltage-signal input interface for receiving a three-phase voltage signal indicative of a status voltage in a stationary reference frame of the inverter of each of three phases of a three-phase AC output voltage of the inverter;
- a reference-signal input interface for receiving a reference voltage signal indicative of a desired three-phase AC output voltage of the inverter in a stationary reference frame of the inverter. Thus a rotating reference frame control structure --so to say in the dq-reference frame-- of the controller arrangement can be embedded in respective three-phase AC input/output voltage interface.

Preferably, in the controller arrangement the transformation-control-computation unit is configured to determine and provide from the three-phase voltage signal and the reference voltage signal, the transformed voltage-control signal, that is indicative of a difference between the three-phase AC output voltage and the desired three-phase AC output voltage in the synchronous-rotating reference frame of a fundamental frequency of the three-phase AC output voltage.

Additionally or alternatively, the switching-element control-signal unit is configured to generate and provide a switching-element control signal for controlling switching elements of the inverter such that a difference between the three-phase AC output voltage and the desired three-phase output voltage is minimized.

Preferably, in the controller arrangement a control element implements proportional, integral and/or differential control terms is arranged within the control structure with the one or more resonant-control elements.

Additionally or alternatively in a preferred development a frequency of at least one of the resonant-control elements is equal to twice the fundamental frequency.

Additionally or alternatively, in a preferred development a frequency of at least one of the resonant-control elements is equal to a frequency of a set of frequencies comprising: six times the fundamental frequency and twelve times the fundamental frequency of the three-phase AC output voltage.

Preferably, in a preferred development the one or more resonant-control elements are arranged within the control structure in parallel to each other.

A detailed signal path of the control structure in the controller arrangement is suggested in various aspects of preferred developments. Preferably, each of the control-signal-generation paths comprises an outer voltage control loop and an inner current control loop.

Preferably, the control structure comprises an outer voltage control loop that comprises the transformation-control-computation unit and the one or more resonant-control elements and that is configured to generate an internal-current reference signal indicative of a desired internal current of the inverter.

Preferably, the control structure comprises a current input interface for receiving a current signal indicative of an internal current of the inverter.

Preferably, the control structure comprises an inner current control loop that is configured, using the current signal and the internal-current reference signal, to generate and provide the switching-element control signal.

It has been shown to be of advantage that a control element implementing proportional, integral and/or differential control terms and/or resonant-control elements is used in the inner current loop for generating the switching-element control signal.

These and other aspects of the invention will be apparent from and elucidated with reference to the embodiments described hereinafter with reference to the enclosed drawings. The embodiments of the invention are described in the following on the basis of the drawings in comparison with the state of the art, which is also partly illustrated. The latter is not necessarily intended to represent the embodiments to scale. Drawings are, where useful for explanation, shown in schematized and/or slightly distorted form. With regard to additions to the lessons immediately recognizable from the drawings, reference is made to the relevant state of the art. It should be borne in mind that numerous modifications and changes can be made to the form and detail of an embodiment without deviating from the general idea of the invention. The features of the invention disclosed in the description, in the drawings and in the claims may be essential for the further development of the invention, either individually or in any combination. In addition, all combinations of at least two of the features disclosed in the description, drawings and/or claims fall within the scope of the invention. The general idea of the invention is not limited to the exact form or detail of the preferred embodiment shown and described below or to an object which would be limited in comparison to the object claimed in the claims. For specified design ranges, values within the specified limits are also disclosed as limit values and thus arbitrarily applicable and claimable. Further advantages, features and details of the invention result from the following description of the preferred embodiments as well as from the drawings. In the following, a summary of the figures is given.

In the following it is shown in:

FIG. 1A: a first preferred embodiment of an electrical power system comprising a converter arrangement comprising an inverter arrangement with an inverter structure, namely a three-phase four-wire inverter with electrical coupling means to a generatorset;

Fig. 1B: a second preferred embodiment of an electrical power system comprising a converter arrangement comprising an inverter arrangement with an inverter structure INV, namely a three-phase four-wire inverter with electrical coupling means to a power storage and capacitors placed at transformer secondary side;

FIG. 2A: a preferred embodiment shown in schematic form, wherein a first aspect of a preferred control structure of the controller arrangement is elucidated;

FIG. 2B: a preferred embodiment shown in schematic form, wherein a second aspect of a preferred control structure of the controller arrangement is elucidated;

FIG. 3: a preferred embodiment of a controller arrangement with the control structure, namely in detail the rotating reference frame control structure in combination with the resonant control structure 106_res and the control structure of the three-phase inverter; in particular with -5th, +7th, -11th, +13th i.e. with harmonic compensators using 6-omega ($\omega$) and 12-omega ($\omega$) resonant controllers wherein also unbalanced load compensators using 2-omega ($\omega$) resonant controllers are provided;

FIG. 4: simulation results for a three-phase inverter (inverter arrangement with inverter structure) using multiple resonant controllers of a controller arrangement (line code dotted, full, dashed for phase a. b. c, and thin for neutral wire);

FIG. 5: a preferred embodiment of a method for controlling operation of a switched mode electrical power inverter.

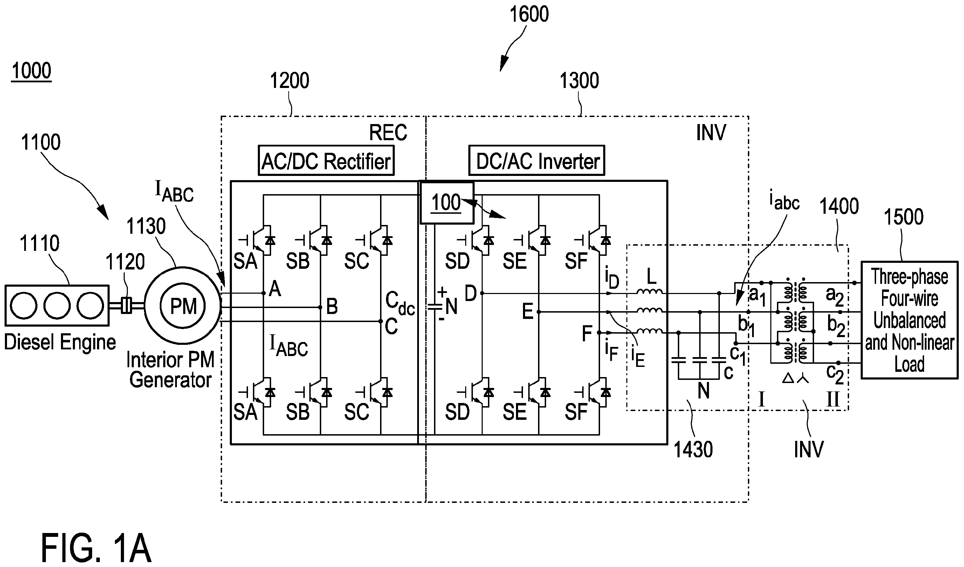

Fig. 1A shows a first preferred embodiment of an electrical power system 1000; the electrical power system 1000 comprises a converter arrangement 1600 comprising an inverter arrangement 1300 with an inverter structure INV. The inverter arrangement 1300 is provided as a switched mode electrical power inverter and provides an environment and setting for operating the inverter structure INV.

The embodiment of the electrical power system 1000 as shown in Fig. 1A comprises a generatorset 1100, wherein the generatorset 1100 has a Diesel engine 1110 drivingly connected by suitable crank coupling means 1120 to an electromagnetic generator 1130.

The generator 1130 in this embodiment is provided as an interior permanent magnet (PM) generator and is operable to generate a three-phase -as such comparably irregulated-- alternating current $I_{ABC}$. The three phases of the alternating current $I_{ABC}$ (respectively voltage) are indicated at the power lines of phase A, phase B and phase C to transfer electrical power to the a converter arrangement 1600.

The converter arrangement 1600 of the electrical power system 1000 further comprises a rectifier 1200; said rectifier is adapted for receiving the electrical power with said three-phase alternating current $I_{ABC}$ from the generator 1130. Said rectifier, more precisely, is constituted as an AC/DC rectifier with a rectifier structure REC. Thus the rectifier 1200 structurally is constituted with a rectifier structure REC comprising a number of switching elements realized through a parallel or anti-parallel arrangement of a diode and a transistor indicated in the embodiment of Fig. 1A with SA, SB, SC.

The AC/DC rectifier provides a DC current to the inverter structure INV of the switched mode electrical power inverter arrangement 1300 as mentioned above. Said DC/AC inverter thus receives the three-phase current $I_{ABC}$ by means of the coupling capacity C as shown in Fig. 1A there between the inverter structure INV of the inverter arrangement 1300 and rectifier structure REC of the rectifier arrangement 1200. By means of regulating the DC current provided by the rectifier arrangement 1200, the inverter arrangement 1300 operates the switching elements SD, SE, SF of the inverter structure INV to constitute an three-phase current with three phases which are indicated in the embodiment of Fig. 1A with D, E and F. The switching elements SD, SE, SF of the inverter structure INV are shown herewith only as an example and coupled to the transformer. Also, other kind of configuration of switching elements can be constituted depending on the application and demand, wherein e.g. a primary and secondary bridge circuit each establish a full-bridge converter circuit (H-bridge circuit) or the like and can each comprise four or more switching elements, wherein the switching elements are realized through a parallel --more precisely anti-parallel-- arrangement of a diode and a transistor.

It should be noted that the generatorset 1100 in combination with the rectifier arrangement 1200 thus can be considered as a kind of -in abstract meaning-- "DC power source" and the inverter arrangement 1300 can be considered as an -in abstract meaning-- inverter means to transform the DC current of said "DC power source" whilst operating the inverter structure INV to provide a three-phase current to a transformer or the like inductor arrangement 1400 of the electrical power system 1000 shown in Fig. 1A.

The inductor arrangement 1400 in this embodiment in turn is constituted as a three-phase Delta/Y transformer 1410 coupled to the inverter structure INV by means of an intermediate electrical coupling means. The intermediate electrical coupling means can be constituted with an inductance and/or capacitor sequence 1430 also adapted for the three phases a1, b1, c1 on the primary side I of the inductor arrangement 1400. Respectively, the transformed voltage a2, b2, c2 on the secondary side II of the inductor arrangement 1400 is indicating a three-phase four-wire alternating current $i_{abc}$ for connecting a load.

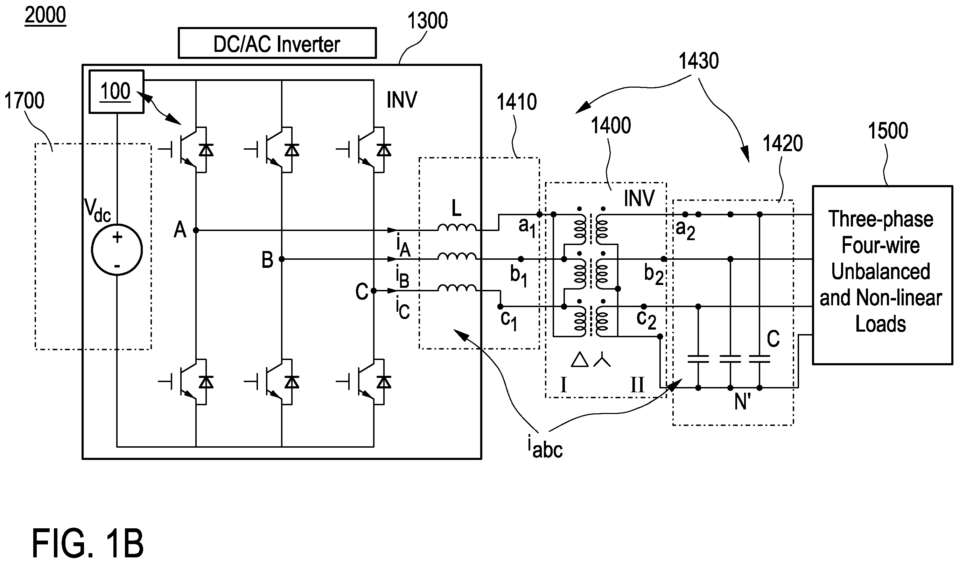

The load 1500 in the embodiment of Fig. 1A is indicated as a three-phase four-wire unbalanced and non-linear load. For these and other kind of electrical power systems 1000, (and electrical power systems 2000 of the kind shown in Fig. 1B), it has been shown that in particular a heavy unbalanced and non-linear load has a great impact on the operation of the inverter arrangement 1300 and thus it is a specific desire to provide an efficient --not too sophisticated but still reliable- - and pure result of a three-phase voltage of alternating power from said inverter structure INV in the inverter arrangement 1300.

Thus, the inverter structure INV of the inverter arrangement 1300 is controlled as a switched mode electrical power inverter arrangement by a controller arrangement 100 depicted symbolically with control connection indicated by a double arrow therein.

Fig. 1B shows a similar more simplified and thus abstract general form of an electrical power system. Said power system 2000 in this case comprises a DC voltage source 1700 of general kind, which can be constituted in a different or similar way as compared to the combination of generatorset 1100 and rectifier 1200 of the embodiment of electrical power system 1000 shown in Fig. 1A. The electrical power system 2000 of Fig. 1B thus provides for the inverter arrangement 1300 electrical coupling means 1430 and symbolically shown load 1500 as described before with the embodiment of Fig. 1A. In this embodiment the inductance and/or capacitor sequence 1410, 1420 of the electrical coupling means 1430 is shown in detail.

The Delta/Y transformer in this case is shown connected to the inverter arrangement 1300 with inverter structure INV by means of an inductance sequence 1410 to the three-phase inductor arrangement 1400 which in this embodiment in turn is constituted as a three-phase Delta/Y transformer 1410 and to the load 1500 by mans of a capacitor sequence 1420.

Specifically the inverter arrangement 100 of the electrical power system 1000 shown in Fig. 1A will be implemented in a preferred embodiment as an onboard hybrid train auxiliary inverter product. The system constitutes a 660V DC source connected to a 70kVA three-phase inverter which is supplying a 400V switchboard through Delta/Y transformer as shown in Fig. 1A. The transformer has three-phase three-wire in the primary side I and three-phase four-wire in the secondary side II. The loads 1500 could be arbitrary, for example, single-phase loads with unbalanced three-phase distribution, three-phase balanced/unbalanced load, nonlinear diode rectifier type of load or random combinations of those loads.

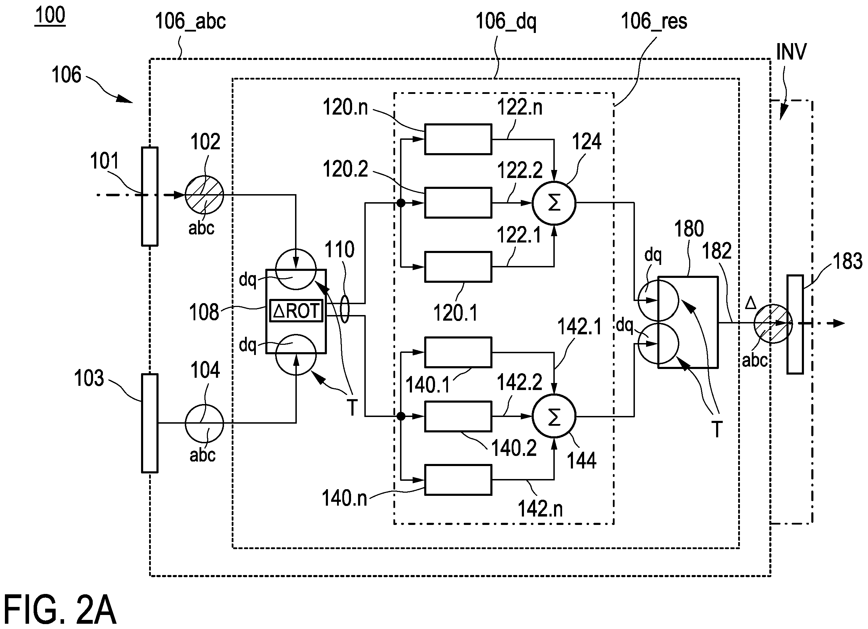

This being said, in turn, Fig. 2A shows the details of a controller arrangement 100, which is shown only symbolically with the embodiments of Fig. 1A and Fig. 1B.

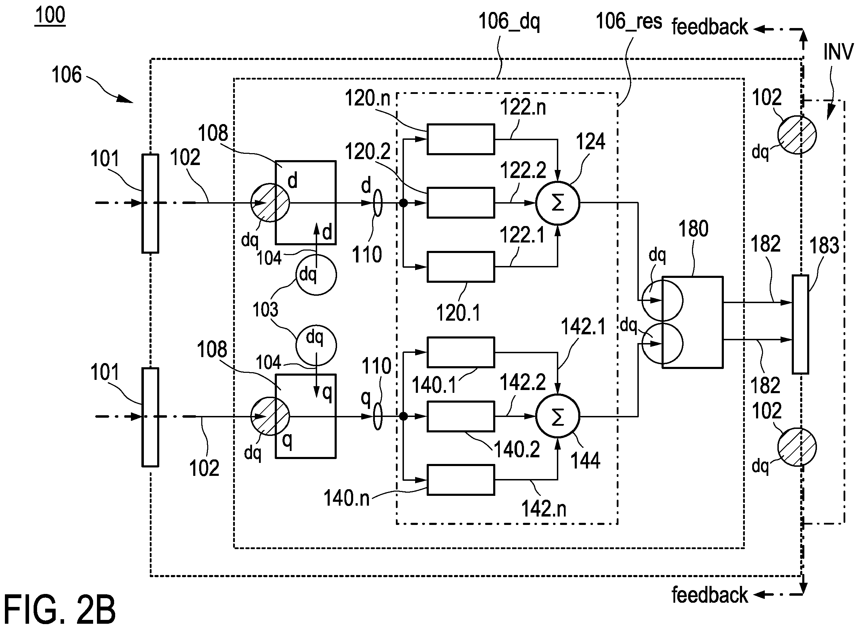

Fig. 2A shows in a first schematic and general scheme the conceptual layout of a controller arrangement 100 in a preferred embodiment for controlling operation of an inverter 100 in form of the switched mode electrical power inverter shown in Fig. 1A and Fig. 1B. The controller arrangement has a control structure 106, which is shown conceptually in this embodiment of Fig. 2A and in a further conceptual detail in the embodiment of Fig. 2B.

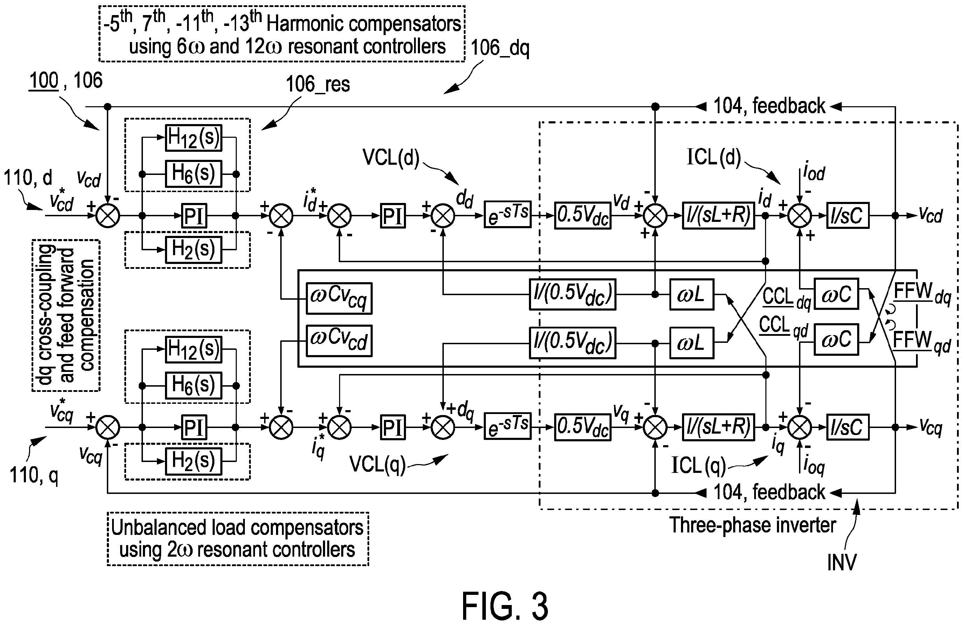

The control structure 106 is shown with greater detail in the embodiment of Fig. 3 with parameters used and specification of control-signal-generation paths and loops as will be clear therefrom below.

At first, thus herewith, Fig. 2A, Fig. 2B are considered to elucidate various aspects of one embodiment and for a better overview. In the following for identical or similar features of this embodiment or features of identical and similar function the same reference marks are used.

Fig. 2A in this sense shows the conceptual layout of the controller arrangement 100 with the control structure 106; the latter is depicted with reference to the basic setting of an outer control structure 106_abc which relates to the three-phase form of a voltage signal as given in the coordinate system. These herewith are related to the three phases A, B, C or D, E, F of the inverter phases as elucidated and described with the embodiments of Fig. 1A and Fig. 1B.

Thus, the signal line interfaces shown herewith at first are related to the three-phase form of a voltage signal as given in the coordinate system but with transformation then are assigned basically to the voltage signal as will be more elucidated in detail with Fig. 3.

The outer control structure related with the three phases in the static system --so to speak the control structure 106_abc-- provides a voltage signal input interface 101 which is adapted for receiving a three-phase voltage signal 102. In Fig. 2A this three-phase voltage signal 102 is indicated additionally with the reference signs a, b, c to indicate the three phases of the inverter voltages as described above. Said voltage signal input interface 101 receives a three-phase voltage signal 102 thus being indicative of a status voltage in a stationary reference frame of the inverter of each of the three phases a, b, c of a three-phase AC output voltage of the inverter.

Further, in the lower part of the embodiment scheme of Fig. 2A in analogue kind a reference signal interface 103 is indicated for receiving a reference voltage signal 104. Here the reference voltage signal 104 is meant to be given as a presetting. Thus, in this sense, a reference voltage signal 104 is indicative of a desired three-phase AC output voltage of the inverter in the same stationary reference frame of the inverter like the aforementioned voltage signal 102. Also here, to be clear, for the reference signal input interface the received reference voltage signal 104 is indicted with the reference marks for the three phases of the stationary reference frame of the inverter, namely a, b, c.

It can be understood that the voltage signal 102 can be considered as an actual measure or otherwise determined status voltage at a certain point of time. Further the reference voltage signal 104 can be considered to be preset in the meaning of a set point which is to be achieved by the status voltage during further control of the inverter by switch mode controlling said electrical power inverter 100, namely by switching the control element as indicated in the inverter structure INV of the embodiment Fig. 1A and Fig. 1B.

In a first remarkably advantageous inventive aspect of the instant approach, the preferred embodiment as shown in Fig. 2A elucidates that an abc/dq transformation T is established as shown with the transformation control computation unit 108 applied to each of the voltage signals 102, 104 separately.

Thus, a control structure 106 as shown in the embodiment of Fig. 2A provides for a transformation control computation unit 108 that is configured to determine and provide from a transformed three-phase voltage signal 102 and the transformed reference voltage signal 104 -at first each separately- - a transformed voltage control signal 110.

More precisely, the transformed three-phase voltage signal 102 at first is provided in the dq coordinate system as indicated with the reference sign dq in the signal line 102 and from a transformed reference voltage signal 104 as indicated with the reference sign dq in the reference voltage signal line 104.

Thereby, a transformed voltage control signal 110 is provided, wherein all of the aforementioned transformed signals 102, 104, 110 thus are considered to be established in a synchronous rotating reference frame of a fundamental frequency of the three-phase AC output voltage. Thus, the transformed voltage control signal 110 is directly established from the transformed signals 102, 104, which in turn are assigned to the original three-phase signals 102_abc and 104_abc.

In the preferred embodiment shown in Fig. 2A, the transformed voltage control signal 110 is indicative of a difference between the three-phase AC output voltage and the desired three-phase AC output voltage in the synchronous rotating reference frame of a fundamental frequency of the three-phase AC output voltage.

Due to the fact that both of the three-phase voltage signals 102_abc, 104_abc are transformed at first into the rotating reference frame, the transformed voltage control signal 110 can be considered to be free of any distortions from the reference voltage signal. Thus, the transformed voltage control signal 110 can be considered to represent mainly the information of the voltage signal 102 indicative of a status voltage in a stationary reference frame of the inverter as being transformed into the rotating frame of the dq coordinate system.

This being said, the instant embodiment of control structure 106 provides as an inner control structure 106dq the control structure in the rotating reference frame which herewith is addressed by the reference mark 106dq.

The rotating reference frame control structure 106dq is operating within the synchronous rotating reference frame of the fundamental frequency of the three-phase AC output voltage. The rotating reference frame control structure 106dq --so to say of the dq-reference frame-- provides for a number of resonant control elements depicted in the resonant control structure 106_res as a number of resonant control elements arranged in parallel to each other to establish the resonant control structure 106_res.

This means the transformed voltage control signal 110 is applied to each of the control elements 122.1, 122.2, 122.n with regard to the d coordinate. Further, the voltage control signal 110 is applied to each of the resonant control elements 140.1, 140.2, 140.n with regard to the q coordinate.

It should be mentioned that in parallel to the resonant control elements 120.1, ..., 120.n, 140.1, ..., 140.n further in parallel therewith (not shown here explicitly) a further control element implements proportional, integral and/or differential control terms and thus can be considered as a steady state control element, whereas the resonant control elements are dedicated to a frequency control and can be considered as in particular resonant frequency control. Thus, so to speak, the control element 120.1, 140.1 can be considered to be dedicated to the steady state control with implementation of a proportional, integral and/or differential control term.

Further, at least one of the resonant control elements is in particular dedicated to filter a frequency that is equal to twice the fundamental frequency. The resonant control elements 140.2, 120.2 can be considered to be dedicated to a frequency that is equal to twice the fundamental frequency.

Further resonant control elements 120.3, ..., 120.n and 140.3, ..., 140.n can be considered to be dedicated to a set of frequencies comprising at least the frequencies of six times the fundamental frequency and twelve times the fundamental frequency of the three-phase AC output voltage.

As will be shown later herewith, the steady state control elements 120.1, 140.1 are effective to filter in the dq-reference frame direct component whereas the resonant control element of twice the fundamental frequency balances symmetric situations for single control whereas the resonant control elements dedicated to frequencies of six or twelve times the fundamental frequency can be considered to filter higher harmonics in the dq-reference frame. As the steady state and resonant control elements described above are arranged within the control structure in parallel to each other, this set of filter block for each of the coordinates d and q can be considered to have a large and comparably efficient still sophisticated control block in the form of the resonant control structure shown with Fig. 2A.

The result of the filtered control signal 110 can be shown to provide a pure and smooth sinusoidal transform voltage control signal as a voltage correction signal for use in generating the switching element control signal 182.

For this purpose, the output of the control elements 120.1, ..., 140.n is collected in a sum operator 124, 144. The output signals of the resonance controllers are led together into a single signal for the q and the d coordinate and provided to a switching element control signal unit that is configured to generate and provide a switching element control signal 182 in the rotating reference frame for controlling switching elements of the inverter. The summation of multiple resonant controllers can reject multiple harmonics disturbances for the voltage control loop to ensure the three-phase output voltages remain balanced and sinusoidal under unbalanced and nonlinear load conditions.

Still, said switching element control signal 182 can be considered to be transformed back by an "inverse abc/dq"-transformation, this is T' or "dq/abc"-transformation to provide a respective control signal in the stationary reference frame, which in Fig. 2A is indicated with the reference marks for the three phases of the voltage control signal abc with the control signal 183 as shown therein.

Said control signal 183 provides a status of a three-phase voltage signal indicative of a status voltage in a stationary reference frame as shown in the embodiment of Fig. 2A and in turn can be inputted into the voltage signal input interface 101 which is indicated by a dash-dotted arrow in the embodiment of Fig. 2A.

Fig. 2B is dedicated to the same embodiment, however, highlighting another aspect of the conceptual arrangement thereof with regard to the reference frame control structure 106dq in the synchronous rotating reference frame -- so to say of the dq-reference frame--.assigned to the dq coordinates rotating reference frame.

As clearly indicated in Fig. 2B, a control line for the transformed voltage control signal 110 is established as assigned to the coordinate d thereof. Respectively, the voltage signal input interface 101 is adapted for receiving a voltage signal 102, wherein by means of transformation the transformed voltage control signal 102 of coordinate d is provided to the resonant control structure 106dq as explained above already with regard to the embodiment shown in Fig. 2A. In an analogue kind, the transformed voltage control signal 110 with regard to coordinate q is provided from a further voltage signal input interface 101 as shown in the lower part of Fig. 2B.

Both coordinates --d and q-- are subject to form a difference value between the respective d (in analogue kind q) coordinate of the voltage signal and a reference voltage signal 104, namely the respective coordinate d or q of the reference voltage signal 104.

The difference value is calculated in a transformation control computation unit 108 configured to determine and provide from the voltage signal 102 and the reference voltage signal 104 the transformed voltage control signal 110 of the respective coordinate d, respectively q, as shown in the upper and lower signal line dedicated to the d and q coordinate of Fig. 2B.

Each of the control signals 110 of respective coordinate d, q then is provided to the resonant control structure 106_res with the resonant element, the steady state element and the sum-up element 124, 144 as explained above.

The outcome of each of the coordinate values is provided to the switching element control signal unit that is configured to generate and provide a switching element control signal 182 in the dq coordinate system, this is in the synchronous rotating reference frame system as indicated on the right-hand side of Fig. 2B.

From the inverter status values a voltage signal indicative of a status voltage in the dq synchronous rotating reference frame system is taken as a feedback value in a control signal 183 of Fig. 2B; i.e. still within the dq synchronous rotating reference frame system. This feedback signal can be considered as a reference voltage signal in the form of a feedback voltage and can be given by means of the voltage signal input interface 101 to the rotating frame control structure 106dq as indicated above; so to say as a voltage control signal 102 to the voltage signal input interface 101.

It should be noted that the rotating reference frame control structure 106dq --so to say of the dq-reference frame-- is closely related to the control structure of the inverter INV as such. The feedback voltage thus can be taken from the same line of d and/or q control signal coordinate as will be apparent from Fig. 3.

Fig. 3 shows in detail the preferred embodiment of a controller arrangement 100 with the control structure 106, namely in detail the rotating reference frame control structure 106dq in combination with the resonant control structure 106_res and the control structure of the three-phase inverter INV as indicated above. The mathematical model of the three-phase inverter shall be derived for the controller design of the details as shown in the preferred example of embodiment of Fig. 3. It is to be assumed that the DC-link has the virtual neutral point N to split the DC-link into two equalized half DC voltages as indicated in Fig. 1A. The symbol ABC is used instead of DEF for the three-phase inverter in Fig. 1A.

Further, it should be mentioned that the voltage is in this embodiment in particular further stepped down using a 298.4V/400V transformer with both resistive and nonlinear loads connected to 400 V switchboards. When the inverter is supplying three-phase unbalanced load, with the Delta-Y transformer, the zero sequence component of the current is circulated in the Delta winding connection. The three-phase inverter side current includes both positive sequence and negative sequence components.

This being said as has been conceptually introduced with elucidation of the embodiment shown in Fig. 2B, each of the control signal 110 coordinates d, q is shown therein in a control signal line dedicated to each of the coordinates d, q, separately.

More precisely based on the mathematical mode in dq-reference frame, the dual loop control strategy is proposed which will be explained below. A closed loop control for the inverter is implemented by a dual-loop control with inner inductor current loop and outer capacitor voltage. For implementing this methodology, three-phase capacitor voltages and inductor currents are status.

The output current reference generated by the voltage loop is compared with the status inductor current to perform an inner current loop control. The current loop control output will generate three phase modulation references, which can be used to generate PWM gating signals for the inverter structure INV.

Thus, the meaning of the signals $d_d$ and $d_q$ going into the three-phase inverter structure INV in Fig. 3 represent a kind of PWM signal for controlling the switching elements of the inverter structure - those are modulation reference signals to generate PWM signals using SPWM (Sinusoidal PWM) or SVPWM (Space Vector PWM) modulation strategies. The meaning of the input signal coming from the inverter that is used in generating the signal $d_d$ it is the d-axis current loop control output plus the q-axis decoupling item; in generating the signal $d_q$ it is the q-axis current loop control output plus the d-axis decoupling item.

In the following, a difference is made between the voltage control line VCL(d), VCL(q) for each of the coordinates d, q, respectively, as part of the rotating reference frame control structure 106dq which is given to the control structure 106 of the inverter INV. Further therein is provided a current control line again dedicated to each of the coordinates d, q which is indicated with reference sign ICL(d) and ICL(q), respectively and can be assigned to the inverter structure INV as such. Derived from the inverter structure INV is the feedback signal 104 (feedback) for use as a reference voltage signal 104 as has been indicated with the embodiment of Fig. 2B before.

Further, the control structure 106 as seen from the embodiment of Fig. 3 provides a cross-coupling between the signal line for the current control line ICL(d) to the voltage control line VCL(q); so to speak a cross-coupling between coordinates d and q and also from the inverter current control line to the inverter voltage control line. The dq cross-coupling herewith is indicated by CCLdq and CCLqd respectively. Further, from the embodiment of Fig. 3 a feed forward compensation is indicated between the coordinate control lines by FFWdq and FFWqd respectively.

Last, it should be noted that the control lines VCL(d), VCL(q) and ICL(d) and ICL(q) in each case may provide for appropriate power factors to apply an alignment and balancing of the respective control signals which is apparent from the control scheme of Fig. 3 in detail. Further, the detailed meaning of the resonant elements in the resonant control structure 106_res is seen from Fig. 3 as has been indicated above. When the inverter is supplying three-phase non-linear diode rectifier load, the load current will have harmonic components which will contain odd order harmonics except triplen harmonics, i.e. negative 5th(11th) order and positive 7th(13th) order harmonics.

By doing abc/dq transformation using a counter clockwise common dq synchronous reference frame rotating at fundamental frequency speed, the positive sequence three-phase components will have the frequency decreased by one order and the negative sequence three-phase components will have the frequency increased by one order. Therefore, the three-phase positive sequence fundamental frequency components will be transformed into DC components in dq reference frame.

The negative sequence fundamental frequency component will be transformed to 2nd order harmonics in dq reference frame. Since the 5th and 11th order harmonics currents are always negative sequence, and 7th and 13th order harmonics are always positive sequence for three-phase diode rectifier load, the 5th and 11th order harmonics will be increased by one order, and 7th and 13th order harmonics will be decreased by one order after the dq transformation.

Therefore, both 5th and 7th order harmonics will be transformed to 6th order harmonics. Likewise, both 11th and 13th order harmonics will be transformed to 12th order harmonics.

Based on the internal model principle, multiple resonant controllers can be used in the voltage loop to provide infinite gain to reject the unbalanced load and harmonic current disturbance caused by nonlinear diode rectifier load.

The voltage loop controller will contain PI- plus $2^{nd}$-, $6^{th}$-, and $12^{th}$- order resonant controllers in one common dq reference frame using internal model principle; i.e. as explained and shown with Fig. 2A and Fig. 2B in the resonant control structure 106_res.

The number of resonant controllers being used is greatly reduced as compared to the method using multiple resonant controllers in stationary reference frame to deal with the nonlinear loads.

For the overall control block diagram as shown in Fig. 3 it shall be noted that the current loop controller output will produce dq modulation references to be transformed in ABC reference frame. The inverter itself functions like an amplifier to amplify the modulation references by half DC-link voltage to produce three-phase terminal output voltages.

The 2nd order frequency of resonant controller H2(s) is set as two times the inverter voltage fundamental frequency.

$$H\_2 (s)=(k\_r\ s)/(s^2+⟦2\omega⟧\_c\ s+(2⟦(\omega)⟧)^2 )$$

where $2\omega c$ is the adjustable bandwidth of the resonant controller, k_r is the resonance coefficient, $\omega$ is the inverter fundamental frequency.

Likewise, the $6^{th}$-, and $12^{th}$- order resonant controller can be written as

$$H\_6 (s)=(k\_r\ s)/(s^2+⟦2\omega⟧\_c\ s+(6⟦(\omega)⟧)^2 )$$

and

$$H\_12 (s)=(k\_r\ s)/(s^2+⟦2\omega⟧\_c\ s+(12⟦(\omega)⟧)^2 )$$

For power supply control like this project, the resonant frequency can be kept exactly 100Hz, 300Hz, and 600Hz. The discretization of the resonant controller can be done using Zero Order Hold (ZOH) method to guarantee infinite gain at the resonant frequency, so that the steady state control for those harmonics can be controlled to be zero in theory. Different methods to discretize the resonant controllers and their comparisons are well documented in the literature as e.g. by Alejandro G. Yepes et. al, in "Effects of Discretization Methods on the Performance of Resonant Controllers", IEEE TRANSACTIONS ON POWER ELECTRONICS, VOL. 25, NO. 7, JULY 2010.

It shall be noted that the resonant controller's resonance frequency cannot be close to or exceed the LC- filter's resonance frequency.

After analyzing the standards for the practical equipment or appliances, the proposed controller arrangement and method is advantageous in the sense of efficient and powerful to achieve the object of the invention, in particular so to say "good enough" to guarantee three-phase balanced sinusoidal output voltages in a not too sophisticated setting.

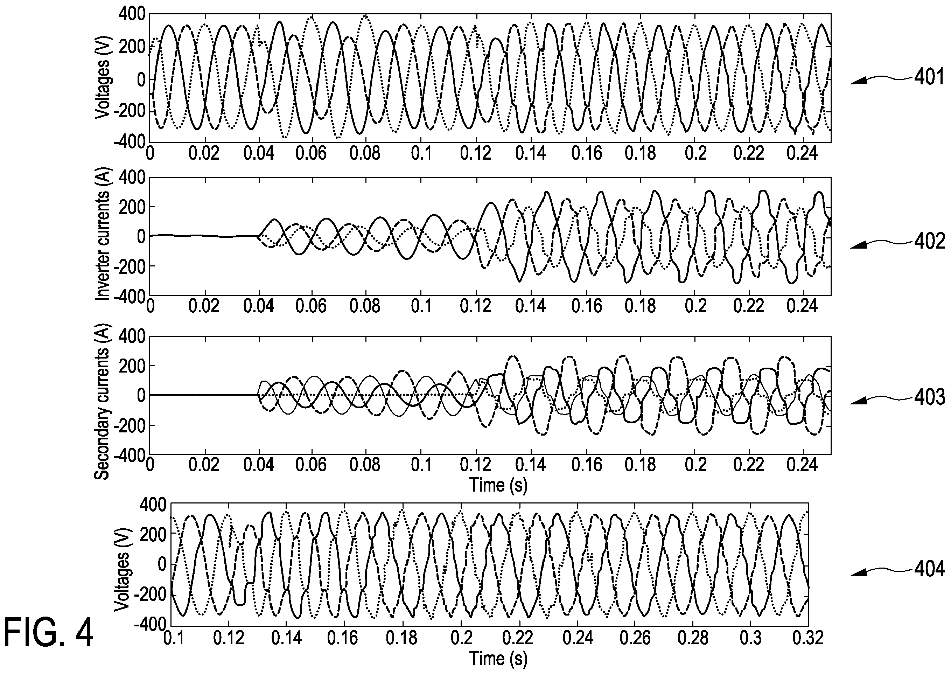

Various simulations for various load conditions have been, including unbalanced linear loads, balanced three-three nonlinear loads, unbalanced three-phase nonlinear loads and hybridization of those different loads. The proposed method is proven effective for most situations as is shown in an example of Fig. 4. The simulations have been executed for a control for three-phase inverter with multiple resonant controllers as explained with the embodiment of Fig. 2B and Fig. 3 - the system specification for the case study simulation is shown below. The filter capacitors are placed at the transformer secondary side as shown in Fig. 1B.

Input DC Voltage:660 V
Inverter Rating: 70 kVA
Switching frequency: 8 kHz
Nominal Output AC Voltage: 660 V
Nominal Output frequency: 50 Hz
Transformer turns ratio: 330/400
Transformer primary side voltage: 330 V (line-line rms)
Transformer secondary side voltage: 4C)0 V (line-line rms)
Three phase L-C filter parameters: L=0.5e-3 HI C=20 pF

Further, for the extreme case such as single-phase highly distorted non-linear heavy load, for example, the three-phase output voltage could be distorted when supplying 20KW single-phase diode rectifier load. Although such loads are rare, because for high-power single-phase load with diode rectifier as front-end (not shown), a power factor correction function (not shown) for such load can be implemented to meet the requirement of IEEE or IEC standard as mentioned in the introduction. E.g. For household appliances, like air-conditioner as an example, the equipment has power factor correction function (normally realized by additional circuit within the appliance) to make sure the input current is close to be sinusoidal.

Thus, the concept of the invention suffices to achieve the object of the invention considering the real-life load condition which is different from academic research as mentioned in the introduction and still has superior effects. Said academic research, start from assuming too extreme load conditions which actually are rare or do not exist. To solve those unpractical assumptions, very complicated methods are required and hard to be implemented, which however have been shown to be impractical during most cases in all-day situations of mid-load inverters.

This being said in Fig. 4 a simulation results for a three-phase inverter (inverter arrangement 1300 with inverter structure INV) using multiple resonant controllers of a controller arrangement 100 is shown.

The three-phase voltages and currents are following the line code dotted, full, dashed for phase a, b, c, and thin for neutral wire. The results in the top panel of simulation at the top of Fig. 4 can be explained as follows.

(1) From t=0 to t=0.04s, standard PI controller was applied to the Inverter voltage loop under no load condition. It can be found that the inverter can reach steady state without overshoot within less than one fundamental period 0.02s. This is due to the well designed voltage loop PI controller.

(2) From t=0.04s to t=0.08s, the three-phase unbalanced loads are added with phase a, b, c resistances set to be 1000 ohm, 4 ohm, and 2 ohm respectively.
It can be seen from the current waveforms caused by the unbalanced loads where the transformer secondary side has neutral line current. Clearly, the three-phase voltages are affected by the loads and become unbalanced.
The voltage loop PI controller is not sufficient to control the three-phase voltage to be balanced under unbalanced load condition.

(3) From t=0.08s to t=0.12s the second order 100Hz resonant controller was enabled in the voltage control loop. Clearly, it can be seen that the three-phase voltages become balanced again using this resonant controller under unbalanced load condition.

(4) From t=0.12s to t=0.16s, the three-phase diode rectifier nonlinear load was added and it can be seen the load current waveforms are distorted which affects the inverter output voltage waveforms. The THDs of phase a, b, c voltages are status to be 17.32%. 13.9%, 12.81 % (status from t=0.14s to t=0.16s). The panel of simulation at the bottom of Fig. 4 shows the results in the top panel of simulation at the top of Fig. 4 on a greater scale from t=0.1s to t=0.32s.

(5) From t=0.16s to the end, the 6th-, 12th- order resonant controllers tuned at 300Hz and 600Hz were enabled in the voltage control loop.
It can be seen that the voltage waveform quality was improved, and the THDs - total harmonic distortion's of phase a, b, c voltages are status to be 8.01 %, 5.16%, 3.80% (status from t=0.3s to t=0.32s). Therefore, the voltage waveform quality was greatly improved after the implementation of 6th and 12h order resonant controllers.

The results in the 2nd and 3rd panel of simulation at Fig. 4 show the inverter currents and the secondary currents respectively with the line code mentioned above.

The panel of simulation at the bottom of Fig. 4 shows the results in the top panel of simulation at the top of Fig. 4 on a greater scale from t=0.1s to t=0.32s.

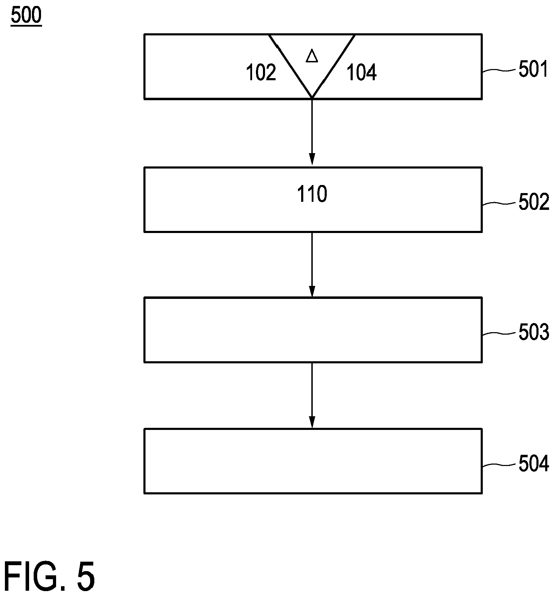

Fig. 5 in detail shows a preferred embodiment of a method for controlling operation of a switched mode electrical power inverter 100.

The method comprises the steps of receiving said voltage signal indicative of a voltage status and receiving a reference voltage signal indicative of a desired voltage 102, 104. As has been explained above this comprises receiving 501 a three-phase voltage signal indicative of a voltage of each of three phases of a three-phase AC output voltage of the inverter in a stationary reference frame of the inverter and receiving 501 a reference voltage signal indicative of a desired three-phase AC output voltage of the inverter.

Further, the method comprises the step 502 of generating and providing a switching element control signal for controlling switching elements of the inverter 100. In this particular case, the switching control signal 110 is provided in that way that a difference between the three-phase AC output voltage and the desired three-phase output voltage is minimized. This comprises the step of generating and providing 502 a switching-element control signal for controlling switching elements of the inverter such that a difference between the three-phase AC output voltage and the desired three-phase output voltage is minimized.

In a further step, a voltage control signal and a voltage correction signal is generated in step 503. This comprises therein generating and providing a switching-element control signal by the further sub-steps of determining and providing 503 a voltage-control signal indicative of a difference between the three-phase AC output voltage and the desired three-phase output voltage, and providing 503, using the voltage control signal, a voltage-correction signal used in generating the switching-element control signal.

Finally, the method further comprises the step of further determining and providing the voltage control signal in a synchronous rotating reference frame and drawing a feedback signal to be inputted as a reference voltage signal indicated above in step 504. This is the method further comprises the step of determining and providing from the three-phase voltage signal the transformed three-phase voltage signal, which is indicative of the three-phase AC output voltage in a synchronous-rotating reference frame of a fundamental frequency of the three-phase AC output voltage.

**Modelling for the three-phase auxiliary inverter**

The mathematical model of the three-phase inverter shall be derived for the following controller design. Assume the DC-link has the virtual neutral point N to split the DC-link into two equalized half DC voltages. The symbol ABC is used instead of DEF for the three-phase inverter in Fig. 3.

The following equations can be derived based on the Kirchhoffs voltage law (KVL)

$$\begin{cases} v_{AN} = v_{CA} + L\frac{di_A}{dt} + Ri_A + v_{N'N} \\ v_{BN} = v_{CB} + L\frac{di_B}{dt} + Ri_B + v_{N'N} \\ v_{CN} = v_{CC} + L\frac{di_C}{dt} + Ri_C + v_{N'N} \end{cases} \quad (1)$$

The capacitor voltage equations can be further expressed as a function of filter current and road current according to Kirchhoff's current law (KCL)

$$\begin{cases} v_{CA} = \frac{1}{C}\int(i_A - i_{oA}) \\ v_{CB} = \frac{1}{C}\int(i_B - i_{oB}) \\ v_{CC} = \frac{1}{C}\int(i_C - i_{oC}) \end{cases} \quad (2)$$

For three-phase three-wire system, the summation of three-phase currents should always be zero. The summation of three-phase capacitor voltages is also zero. By summing up the three equations in Eq. (1), we can obtain that

$$v_{AN} + v_{BN} + v_{CN} = 3v_{N'N} \quad (3)$$

Substitute Eq. (3) into Eq. (1). it can be derived that

$$\begin{cases} \dfrac{2v_{AN}-v_{BN}-v_{CN}}{3} = v_{CA} + L\dfrac{di_A}{dt} + Ri_A \\[2mm] \dfrac{-v_{AN}+2v_{BN}-v_{CN}}{3} = v_{CB} + L\dfrac{di_B}{dt} + Ri_B \\[2mm] \dfrac{-v_{AN}-v_{BN}+2v_{CN}}{3} = v_{CC} + L\dfrac{di_C}{dt} + Ri_C \end{cases} \quad (4)$$

Rewrite Eq.(4) in matrix format

$$\left\{ \begin{pmatrix} \frac{2}{3} & -\frac{1}{3} & -\frac{1}{3} \\ -\frac{1}{3} & \frac{2}{3} & -\frac{1}{3} \\ -\frac{1}{3} & -\frac{1}{3} & \frac{2}{3} \end{pmatrix} \begin{pmatrix} v_{AN} \\ v_{BN} \\ v_{CN} \end{pmatrix} = \begin{pmatrix} v_{AN} \\ v_{BN} \\ v_{CN} \end{pmatrix} = \begin{pmatrix} v_{CA} \\ v_{CB} \\ v_{CC} \end{pmatrix} + L \begin{pmatrix} \frac{di_A}{dt} \\ \frac{di_B}{dt} \\ \frac{di_C}{dt} \end{pmatrix} + R \begin{pmatrix} i_A \\ i_B \\ i_C \end{pmatrix} \right. \quad (5)$$

Different transformation matrices can be found in the appendix

$$i_A = cos\theta\, i_d - sin\theta\, i_q \quad (6)$$

Apply differentiation to Eq. (6)

$$\begin{cases} \frac{di_A}{dt} = -\omega sin\theta\, i_d + cos\theta\frac{di_d}{dt} - \omega cos\theta\, i_q - sin\theta\frac{di_q}{dt} \\[2mm] \frac{di_B}{dt} = \omega sin(\theta - \frac{2\pi}{3})i_d + cos(\theta - \frac{2\pi}{3})\frac{di_d}{dt} - \omega cos(\theta - \frac{2\pi}{3})i_q - sin(\theta - \frac{2\pi}{3})\frac{di_q}{dt} \\[2mm] \frac{di_C}{dt} = -\omega sin(\theta + \frac{2\pi}{3})i_d + cos(\theta + \frac{2\pi}{3})\frac{di_d}{dt} - \omega cos(\theta + \frac{2\pi}{3})i_q - sin(\theta + \frac{2\pi}{3})\frac{di_q}{dt} \end{cases} \quad (7)$$

Eq.(7) can be rewritten in matrix format

$$\begin{pmatrix} \frac{di_A}{dt} \\ \frac{di_B}{dt} \\ \frac{di_C}{dt} \end{pmatrix} = \begin{pmatrix} cos\theta & -sin\theta \\ cos(\theta - \frac{2\pi}{3}) & -sin(\theta - \frac{2\pi}{3}) \\ cos(\theta + \frac{2\pi}{3}) & -sin(\theta + \frac{2\pi}{3}) \end{pmatrix} \begin{pmatrix} \frac{di_d}{dt} - \omega i_q \\ \frac{di_q}{dt} + \omega i_d \end{pmatrix} = T_{dq2ABC} \cdot \begin{pmatrix} \frac{di_d}{dt} - \omega i_q \\ \frac{di_q}{dt} + \omega i_d \end{pmatrix} \quad (8)$$

EP 4 380 022 A1

Substitute Eq. (8) into (5) and apply transformation matrix

$$T_{dq2ABC} \cdot \begin{pmatrix} v_d \\ v_q \end{pmatrix} = T_{dq2ABC} \cdot \begin{pmatrix} v_{Cd} \\ v_{Cq} \end{pmatrix} + T_{dq2ABC} \cdot L \begin{pmatrix} \frac{di_d}{dt} - \omega i_q \\ \frac{di_q}{dt} + \omega i_d \end{pmatrix} + T_{dq2ABC} \cdot R \begin{pmatrix} i_d \\ i_q \end{pmatrix} \quad (9)$$

Left multiple matrix Taac2.iq to both the left and right of Eq. (9). The three-phase inverter mathematica model in dq rotation reference frame can be derived,

$$\begin{pmatrix} v_d \\ v_q \end{pmatrix} = \begin{pmatrix} v_{Cd} \\ v_{Cq} \end{pmatrix} + L \begin{pmatrix} \frac{di_d}{dt} \\ \frac{di_q}{dt} \end{pmatrix} + R \begin{pmatrix} i_d \\ i_q \end{pmatrix} + \begin{pmatrix} -\omega L i_q \\ \omega L i_d \end{pmatrix} \quad (10)$$

Compare Eq. (IO) with Eq. (5) it can be found that there exists cross coupling items between the d and q-axis in dq rotation reference frame.

The same transformation process can be applied to Eq. (2), it can be derived that

$$C \begin{pmatrix} \frac{dv_{Cd}}{dt} - \omega v_{Cq} \\ \frac{dv_{Cq}}{dt} + \omega v_{Cd} \end{pmatrix} = \begin{pmatrix} i_d \\ i_q \end{pmatrix} - \begin{pmatrix} i_{od} \\ i_{oq} \end{pmatrix} \quad (11)$$

The 2nd order frequency of resonant controller H2(s) is set as two times the inverter voltage fundamental frequency.

$$H_2(s) = \frac{k_r s}{s^2 + 2\omega_c s + (2\omega)^2}$$

where 2uc is the adjustable bandwidth of the resonant controller, kr iS the resonance coefficient, u is the inverter fundamental frequency. Likewise, the 6th, and j2th order resonant controller can be written below.

$$H_6(s) = \frac{k_r s}{s^2 + 2\omega_c s + (6\omega)^2}$$

$$H_{12}(s) = \frac{k_r s}{s^2 + 2\omega_c s + (12\omega)^2}$$

**Appendix: Transformation Matrices**

16

$$\begin{pmatrix} v_\alpha \\ v_\beta \end{pmatrix} = \begin{pmatrix} \frac{2}{3} & -\frac{1}{3} & -\frac{1}{3} \\ 0 & \frac{1}{\sqrt{3}} & -\frac{1}{\sqrt{3}} \end{pmatrix} \begin{pmatrix} v_A \\ v_B \\ v_C \end{pmatrix}, \quad \begin{pmatrix} v_A \\ v_B \\ v_C \end{pmatrix} = \begin{pmatrix} 1 & 0 \\ -\frac{1}{2} & \frac{\sqrt{3}}{2} \\ -\frac{1}{2} & -\frac{\sqrt{3}}{2} \end{pmatrix} \begin{pmatrix} v_\alpha \\ v_\beta \end{pmatrix}$$

$$\begin{pmatrix} v_d \\ v_q \end{pmatrix} = \begin{pmatrix} \cos\theta & \sin\theta \\ -\sin\theta & \cos\theta \end{pmatrix} \begin{pmatrix} v_\alpha \\ v_\beta \end{pmatrix}, \quad \begin{pmatrix} v_\alpha \\ v_\beta \end{pmatrix} = \begin{pmatrix} \cos\theta & -\sin\theta \\ \sin\theta & \cos\theta \end{pmatrix} \begin{pmatrix} v_d \\ v_q \end{pmatrix}$$

$$\begin{pmatrix} v_d \\ v_q \end{pmatrix} = T_{ABC2dq} \cdot \begin{pmatrix} v_A \\ v_B \\ v_C \end{pmatrix} = \frac{2}{3} \begin{pmatrix} \cos\theta & \cos(\theta - \frac{2\pi}{3}) & \cos(\theta + \frac{2\pi}{3}) \\ -\sin\theta & -\sin(\theta - \frac{2\pi}{3}) & -\sin(\theta + \frac{2\pi}{3}) \end{pmatrix} \begin{pmatrix} v_A \\ v_B \\ v_C \end{pmatrix}$$

$$\begin{pmatrix} v_A \\ v_B \\ v_C \end{pmatrix} = T_{dq2ABC} \cdot \begin{pmatrix} v_d \\ v_q \end{pmatrix} = \begin{pmatrix} \cos\theta & -\sin\theta \\ \cos(\theta - \frac{2\pi}{3}) & -\sin(\theta - \frac{2\pi}{3}) \\ \cos(\theta + \frac{2\pi}{3}) & -\sin(\theta + \frac{2\pi}{3}) \end{pmatrix} \begin{pmatrix} v_d \\ v_q \end{pmatrix}$$

LIST OF REFERENCE SIGNS

| | |
|---|---|
| 100 | controller arrangement |
| 101 | voltage-signal input interface |
| 102 | three-phase voltage signal |
| 103 | reference-signal input interface |
| 104 | feedback signal for use as reference voltage signal |
| 106 | control structure |
| 106_abc, 106_dq, 106_res | control structure |
| 108 | Transformation-control-computation unit |
| 110 | voltage-control signal |
| | |
| 120.1, 120.2, 120.n, | Resonant-control elements |
| 140.1, 140.2, 140.n | resonant control elements |
| 122.1, 122.2, 122.n, | voltage-correction signal |
| 142.1, 142.2, 142.n | voltage correction signal |
| 180 | Switching-element control-signal unit |
| 182 | Switching-element control signal |
| 183 | control signal |
| 401, 402, 403, 404 | panels of simulation in Fig. 4 simulation results for a three-phase inverter |
| 500, 501, 502, 503, 504 | method steps |
| | |
| 1000 | electrical power system |
| 1100 | generatorset |
| 1110, 1120, 1130 | Diesel engine, crank coupling means, electromagnetic generator |
| 1200 | rectifier arrangement |
| 1300 | inverter arrangement |
| 1400 | inductor arrangement |

| 1410, 1420, 1430 | a three-phase Delta/Y transformer, capacitor sequence of a electrical coupling means |
| 1500 | load |
| 1600 | converter arrangement |
| 1700 | DC voltage source |
| 2000 | power system |
| phase A, phase B, phase C | three phases |
| phase D, phase E, phase F | three phases |
| a1, b1, c1 | three phases |
| a2, b2, c2 | three phases |
| | |
| C | coupling capacity |
| SA, SB, SC | arrangement of a diode and a transistor |
| Iabc, iabc | three phase alternating current |
| REC | rectifier structure |
| INV | Inverter structure |
| VCL(d), VCL(q) | voltage control line |
| ICL(d), ICL(q) | current control line |
| FFWdq, FFWqd | coordinate control lines |
| CCLdq, CCLqd | dq cross-coupling |
| d, q | coordinates |
| Δ | difference |

**Claims**

1. Controller arrangement (100) for controlling operation of an inverter in form of a switched-mode electrical power inverter, the controller arrangement having a control structure (106) comprising:

   - a switching-element control-signal unit (180) that is configured to generate and provide a switching-element control signal (182) for controlling switching elements of the inverter;
   - a transformation-control-computation unit (108), that is configured to determine and provide from a transformed three-phase voltage signal (102) and a reference voltage signal (104), a transformed voltage-control signal (110) in a synchronous-rotating reference frame of a fundamental frequency of the three-phase AC output voltage; and
   - one or more resonant-control elements (120.1, 120.2, 120.n, 140.1, 140.2, 140.n), that receive the transformed voltage-control signal (110) and that are configured, using the transformed voltage-control signal (110), to provide a voltage-correction signal (122.1, 122.2, 122.n, 142.1, 142.2, 142.n) for use in generating the switching-element control signal (182).

2. The controller arrangement according to claim 1, wherein

   - the transformed three-phase voltage signal (102) is a status voltage in a synchronous-rotating reference frame of a fundamental frequency of the three-phase AC output voltage,

   and

   - the reference voltage signal (104) is a feedback voltage in a synchronous-rotating reference frame of a fundamental frequency of the three-phase AC output voltage.

3. The controller arrangement according to claim 1 or 2, wherein the controller arrangement (100) further comprises:

   - a voltage-signal input interface (101) for receiving a three-phase voltage signal (102) indicative of a status voltage in a stationary reference frame of the inverter of each of three phases of a three-phase AC output voltage of the inverter;
   - a reference-signal input interface (103) for receiving a reference voltage signal (104) indicative of a desired three-phase AC output voltage of the inverter in a stationary reference frame of the inverter.

4. The controller arrangement according to one of claims 1 to 3, wherein

18

- the transformation-control-computation unit (108) is configured to determine and provide from the three-phase voltage signal (102) and the reference voltage signal (104), the transformed voltage-control signal (110), that is indicative of a difference between the three-phase AC output voltage and the desired three-phase AC output voltage in the synchronous-rotating reference frame of a fundamental frequency of the three-phase AC output voltage, and/or
- the switching-element control-signal unit (180) is configured to generate and provide a switching-element control signal (182) for controlling switching elements of the inverter such that a difference between the three-phase AC output voltage and the desired three-phase output voltage is minimized.

5. The controller arrangement according to one of claims 1 to 4, wherein

   - a control element implements proportional, integral and/or differential control terms is arranged within the control structure with the one or more resonant-control elements, and/or
   - a frequency of at least one of the resonant-control elements is equal to twice the fundamental frequency, and/or
   - a frequency of at least one of the resonant-control elements is equal to a frequency of a set of frequencies comprising: six times the fundamental frequency and twelve times the fundamental frequency of the three-phase AC output voltage.

6. The controller arrangement according to one of claims 1 to 5, wherein the one or more resonant-control elements are arranged within the control structure in parallel to each other.

7. The controller arrangement according to one of claims 1 to 6, wherein the controller arrangement comprises a power factor unit.

8. The controller arrangement according to one of claims 1 to 7, wherein the control structure comprises an outer voltage control loop that comprises the transformation-control-computation unit and the one or more resonant-control elements and that is configured to generate an internal-current reference signal indicative of a desired internal current of the inverter.

9. The controller arrangement according to one of claims 1 to 8, wherein the controller arrangement comprises a current input interface for receiving a current signal indicative of an internal current of the inverter.

10. The controller arrangement according to one of claims 1 to 9, wherein the control structure comprises an inner current control loop that is configured, using the current signal and the internal-current reference signal, to generate and provide the switching-element control signal.

11. The controller arrangement according to one of claims 1 to 10, wherein a control element implementing proportional, integral and/or differential control terms and/or resonant-control elements is used in the inner current loop for generating the switching-element control signal.

12. The controller arrangement according to one of claims 1 to 11, wherein each of the control-signal-generation paths comprises an outer voltage control loop and an inner voltage control loop.

13. The controller arrangement according to one of claims 1 to 12, wherein the control structure comprises control-signal-generation paths for providing different control operations for each coordinate of the synchronous rotating reference frame, in particular wherein different control operations for each dq-coordinate of the synchronous rotating reference frame is provided.

14. The controller arrangement according to one of claims 1 to 13, wherein the transformation between the three-phase voltage signal and the transformed three-phase voltage signal is an abc/d-transformation like a Park-transformation or a Clarke transformation or a DQZ-transformation.

15. Switched-mode electrical power inverter arrangement having a switched-mode electrical power inverter, hereinafter inverter, in particular also comprising a rectifier, the inverter being adapted for converting a DC voltage into a three-phase AC voltage and a controller arrangement according to one of claims 1 to 14, wherein the controller arrangement is configured to generate and provide a switching-element control signal for controlling switching elements comprised within the inverter.

**16.** Electrical-power system comprising:

- a DC-Voltage source,
- a switched-mode electrical power inverter arrangement according to claim 15,
- a 3-phase inductor arrangement, in particular transformer,
- a switchboard for connecting a load,
in particular wherein
the DC-Voltage source is provided as a generatorset with a rectifier, wherein

- the generatorset comprises an internal combustion engine and a electromechanical generator for generating a irregulated 3-phase voltage,
- the rectifier is adapted as a AC-DC rectifier to convert the irregulated 3-phase voltage into a DC-voltage, and

- said switched-mode electrical power inverter arrangement is adapted to provide a regulated 3-phase voltage to the switchboard for connecting the load.

**17.** A method for controlling operation of a switched-mode electrical power inverter, hereinafter inverter, with a controller arrangement according to one of claims 1 to 14, the method comprising the steps of:

- receiving (501) a three-phase voltage signal indicative of a voltage of each of three phases of a three-phase AC output voltage of the inverter in a stationary reference frame of the inverter;
- receiving (501) a reference voltage signal indicative of a desired three-phase AC output voltage of the inverter;
- generating and providing (502) a switching-element control signal for controlling switching elements of the inverter such that a difference between the three-phase AC output voltage and the desired three-phase output voltage is minimized, wherein generating and providing a switching-element control signal comprises the further sub-steps of

- determining and providing (503) a voltage-control signal indicative of a difference between the three-phase AC output voltage and the desired three-phase output voltage, and
- providing (503), using the voltage control signal, a voltage-correction signal used in generating the switching-element control signal;

wherein the method further comprises the step of determining and providing from the three-phase voltage signal the transformed three-phase voltage signal, which is indicative of the three-phase AC output voltage in a synchronous-rotating reference frame of a fundamental frequency of the three-phase AC output voltage.

**FIG. 1A**

EP 4 380 022 A1

FIG. 1B

FIG. 2A

EP 4 380 022 A1

FIG. 2B

EP 4 380 022 A1

FIG. 3

FIG. 4

EP 4 380 022 A1

FIG. 5

Europäisches
Patentamt

European
Patent Office

Office européen
des brevets

# EUROPEAN SEARCH REPORT

**Application Number**

**EP 22 21 0939**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BARRAGAN-VILLAREJO MANUEL ET AL: "Harmonic and Imbalance Compensation in Grid-Forming VSC", 2020 IEEE INTERNATIONAL CONFERENCE ON INDUSTRIAL TECHNOLOGY (ICIT), IEEE, 26 February 2020 (2020-02-26), pages 757-762, XP033756048, DOI: 10.1109/ICIT45562.2020.9067175 [retrieved on 2020-04-14] * page 757 - page 760; figures 1,2 * | 1-17 | INV. H02M1/00 |
| X | MATAS-DIAZ FRANCISCO JESUS ET AL: "Active harmonic filtering of islanded converter interfaced generation considering the thermal limits", 2022 INTERNATIONAL CONFERENCE ON SMART ENERGY SYSTEMS AND TECHNOLOGIES (SEST), IEEE, 5 September 2022 (2022-09-05), pages 1-6, XP034198303, DOI: 10.1109/SEST53650.2022.9898155 [retrieved on 2022-09-28] * pages 1-3; figure 1 * | 1 | |
| | | | TECHNICAL FIELDS SEARCHED (IPC) |
| X | CN 110 544 956 A (TBEA XINJIANG SUNOASIS CO LTD) 6 December 2019 (2019-12-06) * abstract; figures 2,4 * | 1 | H02M |

The present search report has been drawn up for all claims

| Place of search | Date of completion of the search | Examiner |
|---|---|---|
| The Hague | 21 April 2023 | Gusia, Sorin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 21 0939

This annex lists the patent family members relating to the patent documents cited in the above-mentioned European search report.
The members are as contained in the European Patent Office EDP file on
The European Patent Office is in no way liable for these particulars which are merely given for the purpose of information.

21-04-2023

| Patent document cited in search report | | Publication date | Patent family member(s) | Publication date |
|---|---|---|---|---|
| CN 110544956 | A | 06-12-2019 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LUIS FERNANDO ALVES PEREIRA et al.** Multiple Resonant Controllers for Uninterruptible Power Supplies - A Systematic Robust Control Design Approach. *IEEE TRANSACTIONS ON INDUSTRIAL ELECTRONICS,* March 2014, vol. 61 (3

- **SHUAI JIANG et al.** Low-THD, Fast-Transient, and Cost-Effective Synchronous-Frame Repetitive Controllers for Three-Phase UPS Inverters. *IEEE TRANSACTIONS 2994 ON POWER ELECTRONICS,* June 2012, vol. 27 (6
- **ALEJANDRO G. YEPES.** Effects of Discretization Methods on the Performance of Resonant Controllers. *IEEE TRANSACTIONS ON POWER ELECTRONICS,* July 2010, vol. 25 (7